# FASCICULE DE BREVET EUROPEEN

(11) **EP 0 993 399 B1**
(45) Date de publication et mention de la délivrance du brevet: **29.05.2002**
(21) Numéro de dépôt: 98933698.7
(22) Date de dépôt: 24.06.1998
(51) Int. Cl.: B60T 13/573, B60T 13/565

(54) **MAITRE-CYLINDRE A REACTION HYDRAULIQUE DYNAMIQUE ET A PISTON FLOTTANT**
HAUPTZYLINDER MIT DYNAMISCHER HYDRAULISCHER REAKTION UND MIT SCHWIMMENDEM KOLBEN
MASTER CYLINDER WITH DYNAMIC HYDRAULIC REACTION AND FLOATING PISTON

(30) Priorité: 27.06.1997 FR 9708124
(43) Date de publication de la demande: 19.04.2000
(73) Titulaire: BOSCH SISTEMAS DE FRENADO, S.L., 08080 Barcelona 6 (ES)
(72) Inventeur: SIMON BACARDIT, Juan, Bosch Systèmes de Freinage, F-93700 Drancy (FR)
(74) Mandataire: Hurwic, Aleksander Wiktor
(86) Numéro de dépôt international: FR9801326
(87) Numéro de publication internationale: WO9900285

(56) Documents cités:
- WO-A-96/07572
- DE-A- 4 101 480
- FR-A- 2 696 142

## Description

La présente invention concerne un maître-cylindre à réaction hydraulique pour servomoteur pneumatique d'assistance au freinage, comprenant : un corps percé d'un alésage principal; un piston principal cylindrique, percé d'un alésage secondaire étagé, et dont une extrémité externe au corps est susceptible de recevoir une force d'assistance orientée suivant une première direction, ce piston principal étant monté de façon étanche dans l'alésage principal pour y délimiter une chambre de travail soumise en fonctionnement à une pression hydraulique; et des moyens de réaction hydraulique, incluant un piston de réaction monté à coulissement étanche dans une section de premier diamètre de l'alésage secondaire, qu'il obture, et présentant une extrémité externe au corps, susceptible de recevoir une force d'actionnement orientée suivant la première direction, la force d'assistance présentant par rapport à la force d'actionnement un retard croissant avec une vitesse d'application de la force d'actionnement

Un maître-cylindre de ce type est par exemple décrit dans le brevet FR - 2 724 354.

Des dispositifs de ce type ont été développés de façon très récente pour leur aptitude à pallier les défauts dynamiques des servomoteurs pneumatiques d'assistance au freinage.

On sait en effet que les servomoteurs pneumatiques d'assistance au freinage, qui sont utilisés pour fournir une force d'assistance de freinage s'ajoutant à la force d'actionnement exercée par le conducteur sur la pédale de frein et en théorie proportionnelle à cette dernière, présentent le défaut de ne pouvoir développer cette force d'assistance qu'après une certain retard par rapport à la force d'actionnement.

Comme la force d'assistance résulte d'une différence entre les pressions pneumatiques régnant respectivement dans une chambre avant du servomoteur, reliée à une source de dépression, et dans une chambre arrière, reliée à l'atmosphère lors du freinage, et comme le retard de la force d'assistance sur la force d'actionnement est dû à une limitation du débit de l'air atmosphérique admis dans la chambre arrière à travers le clapet d'entrée du servomoteur au moment du freinage, ce retard est d'autant plus important que le freinage est brusque.

Or, les situations dans lesquelles le freinage est rapide sont en général des situations d'urgence, dans lesquelles le conducteur aurait au contraire précisément besoin, le plus tôt possible, de la plus grande force d'assistance possible.

Ces considérations ont conduit, tout récemment, au développement de maîtres-cylindres à réaction hydraulique autorisant d'une part une plus grande amplitude d'ouverture du clapet d'entrée du servomoteur, donc un débit d'air accru, et d'autre part une modulation dynamique de la force de réaction, c'est-à-dire une modulation, en fonction de la vitesse de freinage, de la fraction de la force d'assistance que le maître-cylindre à réaction oppose à la force d'actionnement pour ajuster la force d'assistance en fonction de cette force d'actionnement.

Grâce à des dispositifs décrits dans des documents non pré-publiés, il est ainsi possible de réduire considérablement la force de réaction en cas de freinage d'urgence par rapport à la valeur qu'elle présente en cas de freinage normal, ce qui permet corrélativement d'augmenter la force de freinage disponible dans les situations de freinage d'urgence.

Cependant, un problème encore rencontré dans ce développement réside dans la relative complexité structurelle des dispositifs capables de remplir ces fonctions, et notamment la difficulté d'obtenir une variation dynamique de la force de réaction au moyen d'un piston de réaction en une seule partie.

La présente invention a pour but de proposer une solution à ce problème.

A cette fin, le maître-cyiindre de l'invention, par ailleurs conforme au préambule ci-dessus, est essentiellement caractérisé en ce que les moyens de réaction hydraulique comprennent en outre : un siège d'obturation monté sur une face frontale du piston de réaction et tourné vers la chambre de travail; une paroi annulaire, disposée à distance du piston de réaction suivant la première direction, formant une restriction fixe pour l'alésage secondaire, et délimitant un passage central qui présente un second diamètre, inférieur au premier diamètre, et qui fait communiquer la section de premier diamètre de l'alésage secondaire avec la chambre de travail; un piston de changement de rapport, tubulaire, ouvert sur la chambre de travail, et présentant une section externe aval qui traverse à coulissement étanche le passage central de la paroi annulaire et qui comporte une première butée de retenue coopérant avec la paroi annulaire du côté de la chambre de travail, ce piston de changement de rapport étant repoussé par un premier ressort à distance du siège d'obturation, dont il est écarté pour un état de repos du maître-cylindre et par lequel il est obturé pour un état d'actionnement rapide du maître-cylindre; et un piston flottant, annulaire, monté à coulissement étanche dans la section de premier diamètre de l'alésage secondaire et autour d'une section externe amont du piston de changement de rapport, ce piston flottant délimitant, avec la paroi annulaire, une chambre annulaire à basse pression dans laquelle est logé un second ressort sollicitant le piston flottant suivant une seconde direction inverse de la première direction, vers le piston de réaction et vers une seconde butée du piston de changement de rapport.

Dans la configuration la plus fiable, le piston de changement de rapport est monté à coulissement non étanche dans un logement borgne du piston de réaction.

Il est par ailleurs possible de faire en sorte que la courbe de réponse du servomoteur équipé du maître-cylindre de l'invention présente, comme c'est classiquement le cas, un saut initial, en prévoyant que ce maître-cylindre à réaction hydraulique comprenne un troisième ressort sollicitant une bague mobile suivant la première direction contre un appui interne de l'alésage secondaire, et que le piston de réaction présente un épaulement propre à entraîner la bague lorsqu'il est déplacé, à partir d'une position de repos, suivant la seconde direction.

Enfin, il est également possible de faire en sorte que la courbe de réponse du servomoteur équipé du maître-cylindre de l'invention présente la même forme lors d'un freinage et du défreinage consécutif en prévoyant que ce maître-cylindre comprenne un quatrième ressort sollicitant la première butée de retenue suivant la seconde direction, et que la section externe aval et la section externe amont du piston de changement de rapport aient des diamètres respectifs différents, le diamètre de la section aval étant inférieur au diamètre de la section amont.

D'autres caractéristiques et avantages de l'invention ressortiront clairement de la description qui en est faite ci-après, à titre indicatif et nullement limitatif, en référence aux dessins, dans lesquels :
- la figure 1 est une vue globale en coupe d'un servomoteur incorporant le maître-cylindre de l'invention; et
- la figure 2 est une vue en coupe agrandie de la partie du maître-cylindre dans laquelle se concentrent les caractéristiques avantageuses de l'invention.

Comme indiqué précédemment, l'invention concerne un maître-cyiindre à réaction hydraulique 1 destiné à équiper un servomoteur pneumatique d'assistance au freinage 2.

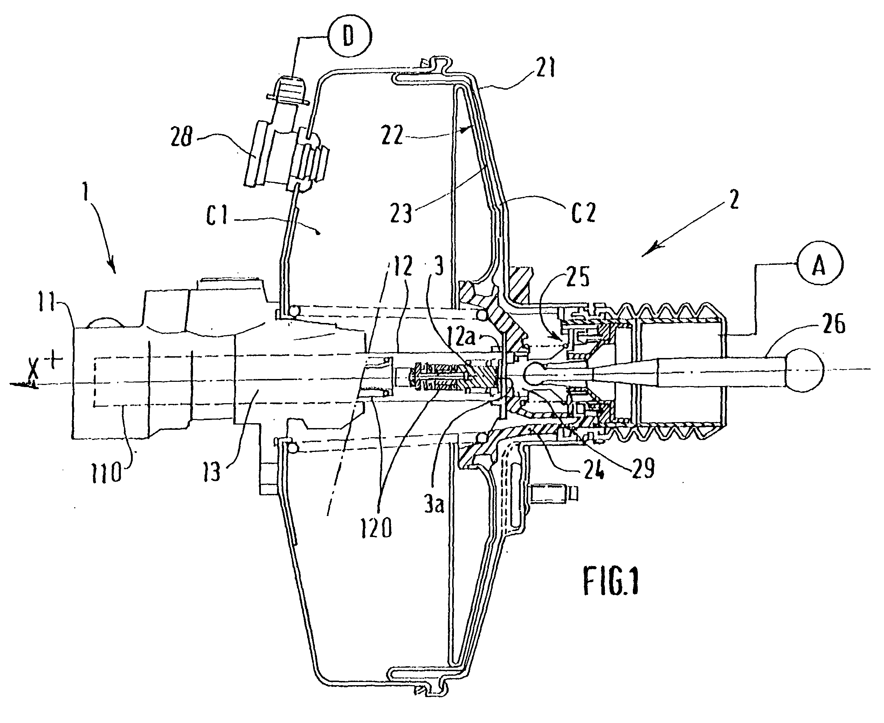

De façon connue en soi, le servomoteur pneumatique d'assistance comprend (figure 1) une enveloppe rigide 21, une cloison mobile 22 comportant une jupe rigide 23, un piston pneumatique 24, un clapet à trois voies 25, et une tige de commande 26 actionnée par une pédale de frein (non représentée).

La cloison mobile 22 sépare de façon étanche le volume intérieur de l'enveloppe rigide 21 en deux chambres pneumatiques C1 et C2, de volume complémentaire et variable.

La première chambre, ou chambre avant C1 est reliée à une source de basse pression D par l'intermédiaire d'une valve anti-retour 28, et la seconde chambre, ou chambre arrière C2 est susceptible d'être sélectivement reliée, au moyen du clapet à trois voies 25, soit à la source de basse pression D, soit à une source de pression relativement haute A, par exemple l'atmosphère.

Grâce à cet agencement connu en soi, l'actionnement du clapet à trois voies 25, qui permet de relier la chambre arrière C2 à la seconde source A, provoque une différence de pression entre les chambres avant et arrière C1 et C2, la cloison mobile 22 se trouvant ainsi sollicitée par une force qui représente la force d'assistance du servomoteur, et se déplaçant à l'intérieur de l'enveloppe 21.

En pratique, le clapet à trois voies 25 est porté par le piston 24 et son ouverture sur la chambre arrière est commandée par l'application d'une force d'actionnement suivant la direction axiale X+ sur la tige de commande 26, cette tige étant elle-même portée par le piston 24 et se terminant par un palpeur 29.

Le maître-cylindre 1 est disposé dans le prolongement de la tige de commande 26 et comprend essentiellement un corps 11 duquel font saillie un piston principal 12 et un piston de réaction 3, ce piston de réaction faisant partie de moyens de réaction hydraulique qui seront détaillés ultérieurement et qui font plus spécifiquement l'objet de l'invention.

Le corps 11 est percé d'un alésage principal 110, dans lequel le piston principal 12, de forme cylindrique et percé d'un alésage secondaire étagé 120, est monté coulissant de façon étanche pour y délimiter une chambre de travail 13 soumise en fonctionnement à une pression hydraulique.

L'extrémité 12a du piston principal 12, qui se trouve à l'extérieur du corps 11, offre un appui au piston pneumatique 24, de manière à recevoir la force d'assistance transmise à ce piston pneumatique 24 par la cloison mobile 22 dans son ensemble, et orientée suivant la direction axiale X+.

De façon similaire, l'extrémité 3a du piston de réaction 3, qui se trouve à l'exterieur du corps 11, offre un appui au palpeur 29 pour recevoir la force d'actionnement exercée par le conducteur suivant la direction axiale X+ et transmise par la tige de commande 26.

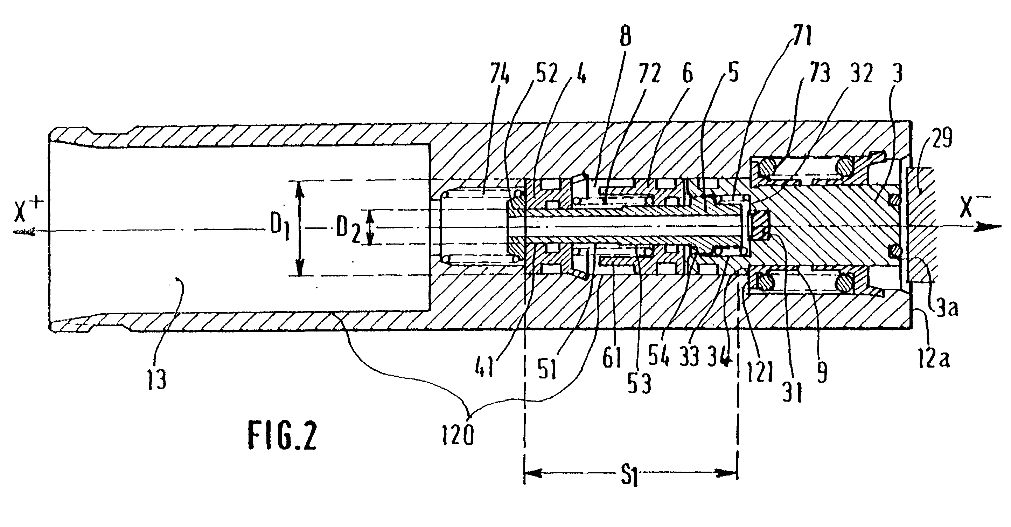

Les moyens de réaction hydraulique qui font plus particulièrement l'objet de l'invention (figure 2) comprennent essentiellement, outre le piston de réaction 3, un siège d'obturation 31, une paroi annulaire 4, un piston de changement de rapport 5, et un piston flottant 6.

Le piston de réaction 3 est monté à coulissement étanche dans une section S1 de premier diamètre D1 de l'alésage secondaire 120, qu'il obture, et le siège d'obturation 31 est monté sur une face frontale 32 du piston de réaction 3, du côté qui est tourné vers la chambre de travail 13.

La paroi annulaire 4, qui peut faire partie intégrante du piston principal 12 ou être rapportée pour permettre une fabrication plus aisée, est disposée à distance du piston de réaction 3 suivant la direction X+, forme une restriction fixe pour l'alésage secondaire 120, et délimite un passage central 41.

Plus précisément, le passage central 41 présente un second diamètre D2, inférieur au premier diamètre D1, et fait communiquer la section S1 de premier diamètre D1 de l'alésage secondaire 120 avec la chambre de travail 13.

Le piston de changement de rapport 5 est tubulaire, ouvert sur la chambre de travail 13, et présente une section externe aval 51 qui traverse à coulissement étanche le passage central 41 de la paroi annulaire 4.

La section externe aval 51 du piston de changement de rapport 5 comporte une première butée de retenue 52 coopérant avec la paroi annulaire 4 du côté de la chambre de travail 13.

Un premier ressort 71 repousse le piston de changement de rapport 5 à distance du siège d'obturation 31, de sorte que le piston de changement de rapport 5 est écarté du siège d'obturation 31 pour un état de repos du maître-cylindre, qui est celui que représente la figure 2, et que le piston de changement de rapport 5 est obturé par le siège d'obturation 31 pour un état d'actionnement rapide du maître-cylindre.

Le piston flottant 6 est annulaire et monté à coulissement étanche à la fois dans la section S1 de premier diamètre de l'alésage secondaire 120 et autour d'une section externe amont 53 du piston de changement de rapport 5.

De cette façon, le piston flottant 6 et la paroi annulaire 4 délimitent ensemble, suivant la direction axiale X+, une chambre annulaire 8 de volume variable, à basse pression, par exemple remplie d'air à la pression atmosphérique, et dont la compression est limitée au moyen d'appuis 61 prévus sur le piston flottant 6 et propres à venir en butée contre la paroi annulaire 4.

Un second ressort 72, logé dans la chambre annulaire 8, sollicite le piston flottant 6 suivant une direction X- inverse de la première direction X+, et plus précisément en direction du piston de réaction 3 et d'une seconde butée 54 prévue sur le piston de changement de rapport 5.

Pour assurer le meilleur guidage possible du piston de changement de rapport 5, il est préférable de monter ce dernier à coulissement non étanche dans un logement borgne 33 du piston de réaction 3, dans lequel sont également disposés le premier ressort 71 et le siège d'obturation 31.

En outre, il est avantageux de prévoir un troisième ressort 73 sollicitant, suivant la direction X+, une bague mobile 9 contre un appui interne 121 de l'alésage secondaire, le piston de réaction 3 présentant lui-même un épaulement 34 pour entraîner la bague lorsqu'il est déplacé suivant la direction inverse X-, à partir de sa position de repos représentée sur la figure 2.

Enfin, il est également possible de prévoir un quatrième ressort 74 sollicitant la première butée de retenue 52 suivant la direction inverse X-, la section externe aval 51 du piston de changement de rapport 5 ayant alors de préférence un diamètre inférieur à celui de la section externe amont 53 de ce piston de changement de rapport 5.

Le fonctionnement du maître-cylindre de l'invention est le suivant.

En cas d'application sur la tige de commande 26 d'une force d'actionnement variant de façon relativement lente, l'enfoncement du palpeur 29 provoque l'ouverture du clapet 25, donc l'admission d'air atmosphérique dans la chambre arrière C2, avant que le piston de changement de rapport 5 ait pu être obturé par le siège d'obturation 31.

Dans ces conditions, la cloison mobile 22 exerce sur l'extrémité 12a du piston principal 12 une force d'assistance qui déplace le piston principal dans la direction X+ et qui s'oppose à tout mouvement relatif du piston de réaction 3 par rapport au piston principal 12 suivant la direction X+, donc interdit au piston de réaction 3 de venir obturer le piston de changement de rapport 5 par le siège 31.

Dans ce mode de fonctionnement, la pression hydraulique qui règne dans la chambre 13 et qui s'exerce, par écoulement fluide à travers le piston de changement de rapport 5, sur toute 1a section de diamètre D1 du piston de réaction 3, finit par repousser d'une part le piston flottant 6 en comprimant le ressort 72, et d'autre part le piston de réaction 3 et la bague 9 en comprimant le ressort 73, et fait ainsi apparaître sur le palpeur 29 une force de réaction dont l'intensité est celle des forces de réaction classiquement mises en oeuvre dans les servomoteurs connus.

En cas d'application sur la tige de commande 26 d'une force d'actionnement variant de façon relativement rapide, le piston de réaction 3 vient en revanche obturer, par son siège 31, le piston de changement de rapport 6 avant que l'air atmosphérique ne puisse être admis dans la chambre arrière C2 en quantité suffisante pour que la cloison mobile 22 puisse exercer sur l'extrémité 12a du piston principal 12 une force d'assistance capable de déplacer le piston principal dans la direction S+ et de rattraper le mouvement du piston de réaction 3.

Dans ce mode de fonctionnement, la pression hydraulique régnant dans la chambre de travail 13 cesse, en raison de l'obturation du piston de changement de rapport 5, de pouvoir s'exercer sur la section de diamètre D1 du piston de réaction 3, et ne peut plus s'exercer que sur la section de diamètre D2 du piston de changement de rapport 5, lequel est appuyé sur le piston de réaction 3.

Or, dans la mesure où le diamètre D2 est inférieur au diamètre D1, il est ainsi possible, selon l'invention, de réduire considérablement la force de réaction qui s'oppose à la force d'actionnement exercée sur le piston de réaction 3 en cas d'application rapide de cette force d'actionnement, donc d'augmenter la force d'actionnement disponible dans les situations de freinage d'urgence.

## Revendications

1. Maître-cylindre à réaction hydraulique pour servomoteur pneumatique d'assistance au freinage, comprenant:
un corps (11) percé d'un alésage principal (110);
un piston principal (12) cylindrique, percé d'un alésage secondaire étagé (120), et dont une extrémité (12a) externe au corps est susceptible de recevoir une force d'assistance orientée suivant une première direction (X+), ce piston principal étant monté de façon étanche dans l'alésage principal pour y délimiter une chambre de travail (13) soumise en fonctionnement à une pression hydraulique; et
des moyens de réaction hydraulique, incluant un piston de réaction (3) monté à coulissement étanche dans une section (S1) de premier diamètre de l'alésage secondaire (120), qu'il obture, et présentant une extrémité (3a) externe au corps, susceptible de recevoir une force d'actionnement orientée suivant la première direction (X+);
la force d'assistance présentant par rapport à la force d'actionnement un retard croissant avec une vitesse d'application de la force d'actionnement;
**caractérisé en ce que** les moyens de réaction hydraulique comprennent en outre :
un siège d'obturation (31) monté sur une face frontale (32) du piston de réaction (3) et tourné vers la chambre de travail (13);
une paroi annulaire (4), disposée à distance du piston de réaction (3) suivant la première direction (X+), formant une restriction fixe pour l'alésage secondaire (120), et délimitant un passage central (41) qui présente un second diamètre, inférieur au premier diamètre, et qui fait communiquer la section (S1) de premier diamètre de l'alésage secondaire (120) avec la chambre de travail (13);
un piston de changement de rapport (5), tubulaire, ouvert sur la chambre de travail (13), et présentant une section externe aval (51) qui traverse à coulissement étanche le passage central (41) de la paroi annulaire (4) et qui comporte une première butée de retenue (52) coopérant avec la paroi annulaire (4) du côté de la chambre de travail (13), ce piston de changement de rapport étant repoussé par un premier ressort (71) à distance du siège d'obturation (31), dont il est écarté pour un état de repos du maître-cylindre et par lequel il est obturé pour un état d'actionnement rapide du maître-cylindre; et
un piston flottant (6), annulaire, monté à coulissement étanche dans la section (S1) de premier diamètre de l'alésage secondaire (120) et autour d'une section externe amont (53) du piston de changement de rapport (5), ce piston flottant délimitant, avec la paroi annulaire (4), une chambre annulaire (8) à basse pression dans laquelle est logé un second ressort (72) sollicitant le piston flottant (6) suivant une seconde direction (X-) inverse de la première direction (X+), vers le piston de réaction (3) et vers une seconde butée (54) du piston de changement de rapport (5).

2. Maître-cylindre à réaction hydraulique suivant la revendication 1, **caractérisé en ce que** le piston de changement de rapport (5) est monté à coulissement non étanche dans un logement borgne (33) du piston de réaction (3).

3. Maître-cylindre à réaction hydraulique suivant l'une quelconque des revendications précédentes, **caractérisé en ce qu'**il comprend un troisième ressort (73) sollicitant une bague (9) mobile suivant la première direction (X+) contre un appui interne (121) de l'alésage secondaire, et **en ce que** le piston de réaction (3) présente un épaulement (34) propre à entraîner la bague lorsqu'il est déplacé, à partir d'une position de repos, suivant la seconde direction (X-).

4. Maître-cylindre à réaction hydraulique suivant l'une quelconque des revendications précédentes, **caractérisé en ce qu'**il comprend un quatrième ressort (74) sollicitant la première butée de retenue (52) suivant la seconde direction (X-), et **en ce que** la section externe aval (51) et la section externe amont (53) du piston de changement de rapport (5) ont des diamètres respectifs différents, le diamètre de la section aval étant inférieur au diamètre de la section amont.

## Patentansprüche

1. Hauptzylinder mit hydraulischer Reaktion für pneumatische Bremskraftverstärker, mit:
einem Körper (11), der mit einer Hauptbohrung (110) versehen ist;
einem zylindrischen Hauptkolben (12), der mit einer abgestuften Sekundärbohrung (120) versehen ist, und bei dem ein außerhalb des Körpers liegendes Ende (12a) eine Hilfskraft aufnehmen kann, die entlang einer ersten Richtung (X+) wirkt, wobei dieser Hauptkolben dicht in der Hauptbohrung aufgenommen ist, um dort eine Arbeitskammer (13) zu begrenzen, die im Betrieb einem hydraulischen Druck ausgesetzt ist; und
hydraulischen Reaktionsmitteln, die einen Reaktionskolben (3) umfassen, der dicht gleitend in einem Abschnitt (S1) der zweiten Bohrung (120) mit einem ersten Durchmesser aufgenommen ist, die er verschließt, und der ein außerhalb des Körpers liegendes Ende (3a) aufweist, das eine Betätigungskraft aufnehmen kann, die entlang der ersten Richtung (X+) wirkt;
wobei die Hilfskraft in Bezug auf die Betätigungskraft eine Verzögerung aufweist, die mit der Geschwindigkeit zunimmt, mit der die Betätigungskraft aufgebracht wird;
**dadurch gekennzeichnet, daß** die hydraulischen Reaktionsmittel ferner umfassen:
einen Verschlußsitz (31), der an einer Vorderseite (32) des Reaktionskolbens (3) angebracht ist und zur Arbeitskammer (13) weist;
eine ringförmige Wand (4), die in einem Abstand zu dem Reaktionskolben (3) entlang der ersten Richtung (X+) angeordnet ist, eine feste Verengung der zweiten Bohrung (120) bildet und eine zentrale Durchführung (41) begrenzt, die einen zweiten Durchmesser aufweist, der kleiner ist als der erste Durchmesser, und die den Abschnitt (S1) der zweiten Bohrung (120) mit dem ersten Durchmesser mit der Arbeitskammer (13) verbindet;
einen rohrförmigen Verhältnisänderungskolben (5), der zur Arbeitskammer (13) offen ist und einen hinteren, äußeren Abschnitt (51) aufweist, der dicht gleitend die zentrale Durchführung (41) der ringförmigen Wand (4) durchquert und der einen ersten Rückhalteanschlag (52) aufweist, der mit der ringförmigen Wand (4) auf der Seite der Arbeitskammer (13) zusammenwirkt, wobei der Verhältnisänderungskolben von einer ersten Feder (71) in einen Abstand von dem Verschlußsitz (31) zurückgedrängt wird, von dem er in einem Ruhezustand des Hauptzylinders beabstandet ist und durch den er in einem Zustand einer schnellen Betätigung des Hauptzylinders verschlossen ist; und
einen ringförmigen, schwimmenden Kolben (6), der dicht gleitend in dem Abschnitt (S1) mit dem ersten Durchmesser der zweiten Bohrung (120) und um einen vorderen, äußeren Abschnitt (53) des Verhältnisänderungskolbens (5) aufgenomomen ist, wobei dieser schwimmende Kolben mit der ringförmigen Wand (4) eine ringförmige Niederdruckkammer (8) begrenzt, in der eine zweite Feder (72) untergebracht ist, die den schwimmenden Kolben (6) entlang einer zweiten Richtung (X-), die der ersten Richtung (X+) entgegengesetzt ist, zu dem Reaktionskolben (3) und zu einem zweiten Anschlag (54) des Verhältnisänderungskolbens (5) beaufschlagt.

2. Hauptzylinder mit hydraulischer Reaktion nach Anspruch 1, **dadurch gekennzeichnet, daß** der Verhältnisänderungskolben (5) nichtdicht gleitend in einer Blindbohrung (33) des Reaktionskolbens (3) aufgenommen ist.

3. Hauptzylinder mit hydraulischer Reaktion nach einem der vorstehenden Ansprüche, **dadurch gekennzeichnet, daß** er eine dritte Feder (73) aufweist, die einen beweglichen Ring (9) entlang der ersten Richtung (X+) gegen einen inneren Anschlag (121) der zweiten Bohrung beaufschlagt, und daß der Reaktionskolben (3) eine Abstufung (34) aufweist, die den Ring mitnehmen kann, wenn sie sich von einer Ruhestellung entlang der zweiten Richtung (X-) verschiebt.

4. Hauptzylinder mit hydraulischer Reaktion nach einem der vorstehenden Ansprüche, **dadurch gekennzeichnet, daß** er eine vierte Feder (74) aufweist, die den ersten Rückhalteanschlag (52) entlang der zweiten Richtung (X-) beaufschlagt, und daß der hintere, äußere Abschnitt (51) und der vordere, äußere Abschnitt (53) des Verhältnisänderungskolbens (5) jeweils verschiedene Durchmesser haben, wobei der Durchmesser des hinteren Abschnitts kleiner ist als der Durchmesser des vorderen Abschnitts.

## Claims

1. Master cylinder with hydraulic reaction for a pneumatic brake booster, comprising:
a body (11) pierced with a main bore (110);
a cylindrical main piston (12) pierced with a stepped secondary bore (120), and of which one end (12a), outside the body, can receive a boost force directed in a first direction (X+), this main piston being mounted, without leaking, in the main bore in order therein to delimit a working chamber (13) which during operation is subjected to a hydraulic pressure; and
hydraulic reaction means including a reaction piston (3) mounted with leaktight sliding in a cross section (S1) of a first diameter of the secondary bore (120) which it closes off, and having an end (3a) outside the body, capable of receiving an actuating force directed in the first direction (X+);
relative to the actuating force, the boost force having a delay that increases with the rate of application of the actuating force;
**characterized in that** the hydraulic reaction means further comprise:
a shut-off seat (31) mounted on a front face (32) of the reaction piston (3) and pointing toward the working chamber (13);
an annular wall (4) arranged some distance from the reaction piston (3) in the first direction (X+), forming a fixed restriction for the secondary bore (120) and delimiting a central passage (41) which has a second diameter smaller than the first diameter and which makes the cross section (S1) of first diameter of the secondary bore (120) communicate with the working chamber (13);
a ratio-change piston (5) which is tubular, open to the working chamber (13) and has a downstream external cross section (51) [sic] which passes with leaktight sliding through the central passage (41) of the annular wall (4) and has a first retaining stop (52) cooperating with the annular wall (4) on the same side as the working chamber (13), this ratio-change piston being pushed back by a first spring (71) some distance from the shut-off seat (31) from which it is separated when the master cylinder is in a condition of rest, and by which it is closed off when the master cylinder is actuated quickly; and
an annular floating piston (6) mounted with leaktight sliding in the cross section (S1) of first diameter of the secondary bore (120) and around an upstream external cross section (53) of the ratio-change piston (5), this floating piston, together with the annular wall (4), delimiting a low-pressure annular chamber (8) in which there is housed a second spring (72) that urges the floating piston (6) in a second direction (X-), the opposite of the first direction (X+), toward the reaction piston (3) and toward a second stop (54) of the ratio-change piston (5).

2. Master cylinder with hydraulic reaction according to claim 1, **characterized in that** the ratio-change piston (5) is mounted with non-leaktight sliding in a blind housing (33) of the reaction piston (3).

3. Master cylinder with hydraulic reaction according to either one of the preceding claims, **characterized in that** it comprises a third spring (73) urging a moving ring (9) in the first direction (X+) against an internal rest (121) in the secondary bore, and **in that** the reaction piston (3) has a shoulder (34) capable of driving the ring along when it is shifted, from a position of rest, in the second direction (X-).

4. Master cylinder with hydraulic reaction according to any one of the preceding claims, **characterized in that** it comprises a fourth spring (74) urging the first retaining stop (52) in the second direction (X-), and **in that** the downstream external cross section (51) and the upstream external cross section (53) of the ratio-change piston (5) have different respective diameters, the diameter of the downstream cross section being smaller than the diameter of the upstream cross section.
